# DEMANDE DE BREVET EUROPEEN

(11) **EP 3 905 138 A1**
(43) Date de publication de la demande: **03.11.2021**
(21) Numéro de dépôt: 20315227.7
(22) Date de dépôt: 28.04.2020
(51) Int. Cl.: G06K 19/077

(54) **PROCÉDÉ DE FABRICATION D'UNE CARTE À PUCE COMPORTANT DU BOIS ET CONFORME AU STANDARD 7810**

(71) Demandeur: THALES DIS FRANCE SA, 92190 Meudon (FR)
(72) Inventeur: Karafotis, Stéphane, 13881 Gemenos Cedex (FR); Subra, Sébastien, 13881 Gemenos Cedex (FR); Oddou, Laurent, 13881 Gemenos Cedex (FR)
(74) Mandataire: Milharo, Emilien

(57) **Abrégé**

L'invention concerne un procédé de fabrication d'une carte à puce (10) comportant un corps avec un insert (16) contenant au moins une feuille en bois (3B, 7B), ledit insert (16) comportant des faces principales externes opposées (15h, 15b) présentant chacune une surface en bois,
caractérisé en ce qu'il comprend l'étape suivante :
- obtention d'une surface en bois (15h, 15b) sur chaque face principale externes opposée de l'insert, par assemblage d'au moins deux feuilles de bois distinctes (3B, 7B) via une structure centrale adhésive (15).

L'invention concerne également une carte correspondante obtenue par le procédé.

## Description

### Domaine de l'invention.

L'invention concerne un procédé de fabrication d'une carte contenant du bois. Plus particulièrement, la carte vise à être conforme entièrement ou se rapprocher le plus possible des spécifications du standard ISO 7810.

Les cartes à puce peuvent avoir ou non une fonction radiofréquence et être du type à contacts et/ou sans contact.

Elles peuvent comprendre une antenne, pour la communication radiofréquence, placée dans le corps de carte et/ou dans le module. Le module est généralement encarté dans une cavité du corps de carte. Un module radiofréquence peut connecter une antenne logée dans le corps de carte, via des éléments d'interconnexion électriques qui relient des zones de connexion de la puce placées sur le module à des plages terminales de l'antenne.

Elles peuvent avoir un module comportant un transpondeur radiofréquence avec la puce et l'antenne portées sur un substrat du module. Le module radiofréquence peut être couplé avec une antenne passive logée dans le corps de carte.

L'invention vise plus particulièrement les cartes bancaires.

### Art antérieur

On assiste actuellement à une demande accrue du public pour des cartes en matière naturelle telle que le bois ou comportant des couches ou feuilles en bois notamment pour des raisons écologiques.

Il est connu de fabriquer des cartes à puce avec un corps entièrement en bois. Alternativement, elles peuvent contenir une feuille de cœur en bois et comporter des feuilles de protection en plastique transparent externe recouvrant le cœur en bois.

Il est connu également d'avoir des cartes entièrement en bois mais leur tenue mécanique n'est pas stable avec le temps et/ou la température et/ou hygrométrie ambiante.

Une carte 100% bois ne peut-pas être compatible avec les tests climatiques en température et humidité appliqués au produit carte bancaire. Le bois étant un matériau « vivant » il évolue structurellement et se déforme (« warpage » en anglais).

Le produit final doit être compatible de préférence avec une structure intelligente et hybride (contacts et sans contact). Le produit final doit être compatible de préférence avec tous les types de personnalisation notamment des personnalisations par estampage à chaud, poinçonnage à chaud.

Il y a donc actuellement une forte demande pour ce genre de carte à puce intégrant des matières écologiques naturelles.

Toutefois, les procédés connus de fabrication de carte « écologique » ne donnent pas entière satisfaction soit vis-à-vis de la tenue mécanique et/ou vieillissement, et/ou de l'aspect.

En particulier, il est très difficile d'avoir une structure de carte de ce type avec des couches de bois et qui permette de satisfaire le standard ISO 7810 des cartes à puce et qui autorise préférentiellement toute, ou du moins, la plus grande majorité des opérations classiques de personnalisation d'une carte à puce.

### Problème technique.

L'invention vise à résoudre les inconvénients précités.

L'invention a pour objectif un procédé de fabrication de cartes qui soient le plus écologiques possible en ayant le plus de matériaux naturels tout en étant compatible avec des cadences et contraintes industrielles.

L'invention vise également à avoir de préférence une structure satisfaisant entièrement les spécifications du standard ISO 7810 ou s'en rapprochant le plus possible. Elle vise à respecter notamment les contraintes de tenues mécaniques et de durabilité dans le temps.

L'invention vise une structure de carte avec des couches de bois permettant de satisfaire le standard ISO 7810 des cartes à puce, tout en autorisant la plus grande majorité des opérations classiques de personnalisation graphique des cartes à puce.

### Résumé de l'invention.

L'invention consiste dans son principe à agencer judicieusement des couches en plastique parmi des couches en bois, dans la structure du corps de carte à puce. En particulier, l'incorporation ou association de couches polymères aux couches en bois permet de limiter la déformation du bois et de passer les tests ISO.

L'invention propose plus particulièrement une structure symétrique avec une couche de bois sur ses deux faces opposées, chaque couche de bois étant elle-même recouverte par un film PVC avec de l'adhésif, comme un film de protection externe (overlay en anglais). Cela permet notamment d'avoir un bon comportement de la carte par rapport à des tests d'épluchage.

L'invention peut prévoir avantageusement une opération préparatoire de pré-laminage de structures en bois ou contenant du bois ci-après [protection transparente adhésive (overlay), structure centrale présentant du bois, protection transparente adhésive (overlay)] afin d'être compatible avec des processus d'impression graphique standards ou classiques (sérigraphie, offset...) ; Cela peut permettre aussi de prémunir et protéger les feuilles en bois contre l'humidité et/ou température ambiante pouvant les déformer.

Dans tous les exemples, les feuilles en bois peuvent être fournies ou pré laminées, avec un film plastique associé recouvrant au moins toute une face (ou les deux) de chaque feuille en bois de manière à la stabiliser contre des risques de déformation.

Afin d'introduire un nouveau produit donnant des performances élevées et conforme à la spécification ISO 7810, le produit envisagé est de préférence compatible avec une structure de carte à contacts électriques et une carte hybride contacts et sans-contact.

Le produit final vise de préférence à être compatible avec tout type de personnalisation graphique, notamment de marquage thermo collé.

L'invention propose un procédé de fabrication de cartes à puce ayant du bois visible en surface externe de la carte pour avoir l'aspect visuel du bois sur au moins une face de la carte et les deux faces opposées de préférence.

La combinaison judicieuse des deux matériaux bois et plastique (ou polymère) telle que le propose l'invention permet d'obtenir des résultats très satisfaisants en termes de tenue mécanique et compatibilité aux opérations de personnalisation habituelles.

De même, l'invention permet de compenser la fragilité relative du bois vis-à-vis des contraintes de flexion, par des propriétés de flexibilité du plastique.

L'invention propose une optimisation dans la combinaison du bois et du plastique dans un corps de carte. Elle permet de déterminer le choix des couches de bois, et celles des couches de plastique dans son épaisseur.

Elle propose également un procédé permettant une fabrication industrielle compatible avec la combinaison des matériaux de composition de la carte.

A cet effet, l'invention a pour objet un procédé de fabrication d'une carte à puce comportant un corps avec un insert contenant au moins une feuille en bois, ledit insert comportant des faces principales externes opposées présentant chacune une surface en bois,
caractérisé en ce qu'il comprend l'étape suivante :
- obtention d'une surface en bois sur chaque face principale externes opposée de l'insert, par assemblage d'au moins deux feuilles de bois distinctes via une structure centrale adhésive.

Ainsi, on obtient une structure de base symétrique (ou premier insert possible de l'invention) présentant deux faces externes opposées en bois, plus adaptée sur son comportement en flexion torsion pour satisfaire le standard ISO 7810.

Des étapes de personnalisation graphique ou marquage peuvent être effectuées sur les feuilles en bois à ce stade. Cependant, il est préférable pour plus de facilité, efficacité ou compatibilité avec l'outil industriel de passer à l'étape ci-dessous de fixation d'un film.

Selon d'autres caractéristiques de l'invention :
- Elle peut prévoir une étape fourniture ou de préparation desdites deux feuilles en bois en étant pré-laminées sur chacune de face principale avec un film de protection polymère ;
- Le procédé comprend de préférence une étape d'adhésion d'au moins un premier film de protection transparent sur ladite surface en bois de chacune des faces principales de l'insert ; ce qui permet d'obtenir un second type d'insert possible et préféré selon l'invention tout en conservant l'aspect du bois.
En outre, il est possible d'effectuer sur cet insert la plupart des opérations de personnalisation graphique, notamment d'impression sérigraphie, offset...).

De même, les opérations d'embossage 20, de marquage à chaud ou fixation à chaud de motifs de décoration ou de personnalisation graphique peuvent être effectuées sans aucune modification des machines couramment utilisées. On retrouve ainsi une stabilité et durabilité des marquages effectués plutôt de de les réaliser sur le bois directement ;
- Le procédé peut donc comprendre de préférence, une étape de personnalisation graphique sur ledit au moins un premier film de protection transparent de l'insert ; Ce qui s'effectue sans adaptation ou modification des techniques de marquage de l'outil industriel ;
- Le procédé peut également comprendre une étape d'adhésion d'au moins un second film de protection transparent sur au moins ledit premier film de protection transparent et/ou ladite personnalisation graphique. Ainsi, on peut protéger également, toute personnalisation graphique.
- La structure centrale adhésive de l'insert peut comprendre, de préférence, un assemblage d'un troisième film polymère sur chaque face principale d'une feuille polymère centrale, la face externe de chaque film polymère portant un adhésif ;

Ainsi, la structure centrale adhésive peut avantageusement utiliser des films de protection (overlays) couramment utilisés dans l'industrie de la carte à puce, placés tête bêche, (leur dos ou leur face polymère contre une feuille centrale de même nature pour permettre une adhésion par laminage à chaud. Par contre, les faces opposées adhésives de chaque film de protection peuvent avantageusement adhérer facilement et correctement contre les surfaces externes des feuilles de bois.
L'avantage d'une feuille centrale, optionnelle, peut être de faciliter un ajustage en épaisseur de l'insert ;
- De mêmes, les premier et second films transparents, recouvrant l'insert, peuvent porter un adhésif sur leur face interne, (comme les films de la structure centrale adhésive); Typiquement, ils peuvent choisis parmi les films de protection (overlays) couramment utilisés dans l'industrie de la carte à puce.
- De préférence, la structure centrale adhésive peut comprendre comprend deux films de protection transparents en PVC avec un adhésif sur une face et placés dos à dos contre une feuille centrale également en PVC. D'autres matériaux ou mode d'application permettant d'avoir le film peuvent être envisagés.
- Avantageusement, la structure de cette carte permet une étape de réalisation d'une antenne sur ou au niveau d'une des couches d'adhésion ou de composition de la structure centrale, de préférence sous les feuilles en bois, sans altérer l'aspect visuel ou l'intégrité mécanique des feuilles de bois.
L'antenne peut être du type métal gravé comme sur des tags RFID ou en fil incrusté.

L'invention a également pour objet une carte correspondant à la celle obtenue par le procédé.

### Descriptif des figures :

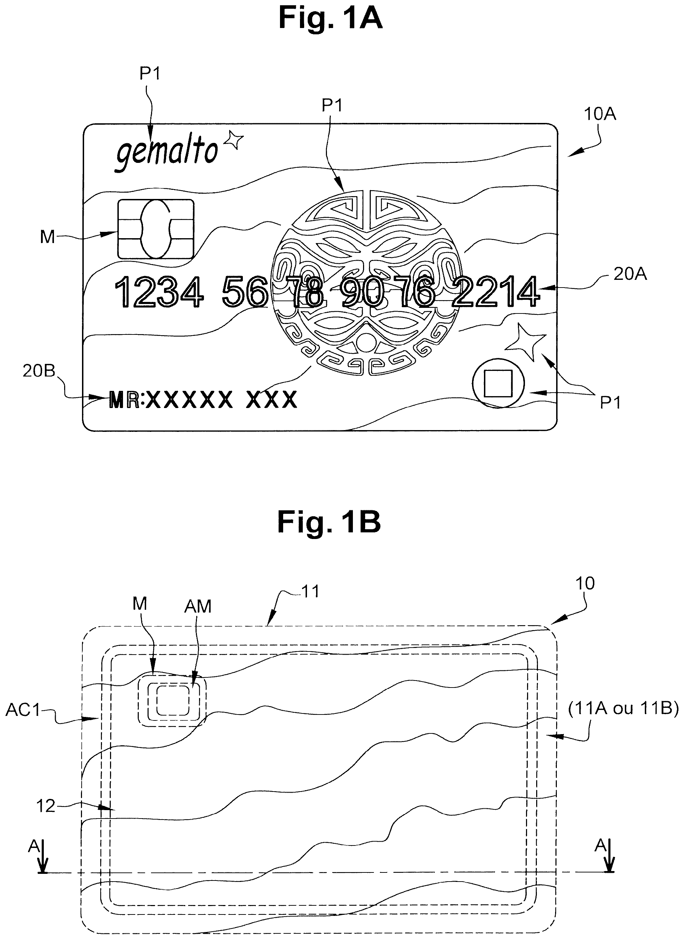

- Les figure 1A, 1B illustrent une carte pouvant être obtenue selon un exemple de mise en œuvre du procédé de l'invention ;

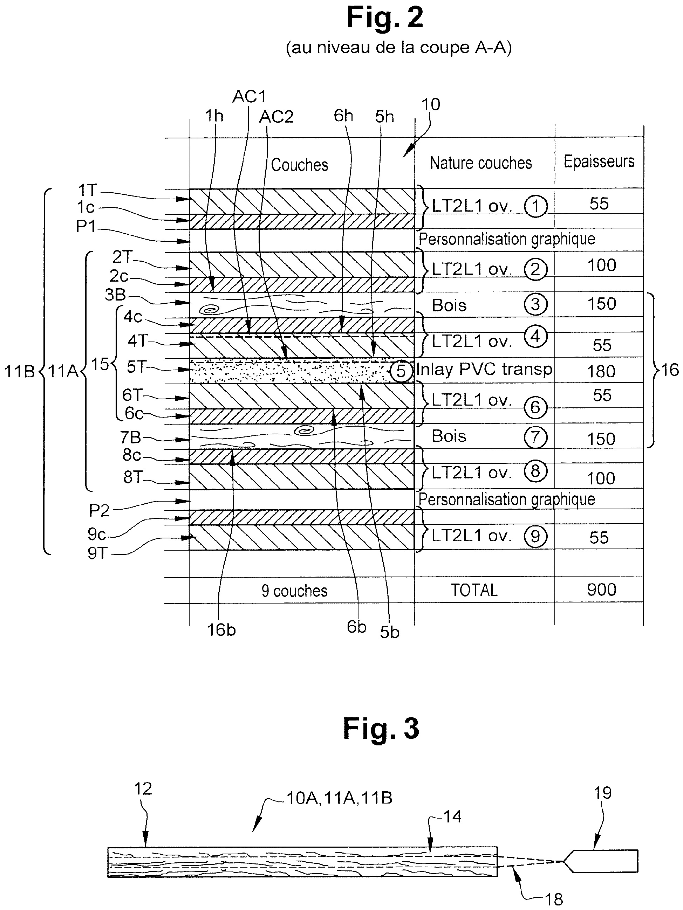

- La figure 2 est une coupe A-A des figures 1A ou 1B, illustrant une structure globale préférée de la carte de l'invention, ainsi que différents étapes possibles d'assemblage ou d'obtention d'inserts (ou inlays) intermédiaires ;
- La figure 3 illustre une étape d'impression / masquage de la tranche de la carte obtenue.

Sur les figures (1A ou 1B) et 2, sont illustrées une carte à puce 10, 10A pouvant être obtenue selon un mode préféré ainsi que plusieurs modes alternatifs du procédé de fabrication de l'invention.

La carte comprend un corps 10, 10A avec un insert 16 (inlay en anglais) qui contient au moins une feuille en bois 3B, 7B comme l'art antérieur; L'insert 16 comporte aussi des faces principales externes opposées 15h, 15b présentant chacune une surface en bois.

La carte comprend généralement un module à puce de circuit intégré M, qui peut être à contacts électriques affleurant en surface du corps de carte. Le module peut être de type hybride (contacts et radiofréquence) ou simplement radiofréquence. Le module radiofréquence de carte à puce (non représenté) peut comprendre de manière connue, par exemple, une puce radiofréquence et une antenne de communication reliée à la puce disposée sur un substrat diélectrique.

Alternativement, la fonction radiofréquence peut être obtenue (avec ou sans module à contacts) à l'aide d'une puce nue connectée directement à une antenne noyée dans une des couches de la structure de la carte.

Selon une caractéristique de l'invention, le procédé comprend une étape permettant l'obtention d'une surface en bois 15h, 15b sur chaque face principale externes opposée de l'insert par assemblage d'au moins deux feuilles de bois distinctes 3B, 7B via une structure centrale adhésive 15. La structure centrale peut comprendre une simple couche simple adhésive ou un assemblage plus complexe. L'adhésif peut être appliqué sur l'une ou chaque feuille avant l'assemblage de l'insert.

Dans l'exemple, pour avoir ces deux faces externes en bois 15h, 15b, plutôt que de recourir à une seule feuille centrale, entière comme dans l'art antérieur, l'invention a recours à deux feuilles de bois 3B, 7B, assemblées ensemble via leur face interne (orientée vers l'autre feuille) à l'aide d'une structure centrale adhésive 15 pour obtenir l'insert 16 (dit basique) à deux feuilles en bois.

Ainsi, au cours d'une étape possible 100 de réalisation d'insert pour carte à puce à base de bois, le procédé peut prévoir de fournir ou former au préalable un insert basique 16 par un assemblage de deux feuilles en bois via une structure centrale adhésive 15, 4c, 6c.

La structure centrale 15, (rendue adhésive avec les couches 4c, 6c) est décrite ultérieurement mais en alternative au mode préféré, la structure adhésive peut être ou comprendre une simple couche adhésive, tel un polyuréthane, une colle à bois, ou autre.

Au cours d'une étape 200, selon une caractéristique du mode préféré de l'invention, le procédé peut prévoir une opération d'adhésion d'au moins un premier film de protection transparent 2T, 8T (ou overlay) sur la surface en bois externe 15h, 15b de chacune des faces principales externe de l'insert basique 16.

Il en résulte un insert bois plastifié ou protégé 11A, (forme préférée par rapport à l'insert basique bois non protégé 16).

Dans l'exemple, l'invention utilise simplement deux films de protection (overlays 2, 8) transparents pour recouvrir et protéger chaque surface externe en bois de l'insert basique 16. L'insert 11A obtenu est protégé et stabilisé

Alternativement, le procédé peut prévoir d'assembler en une seule opération les différentes couches 2 à 8 de la structure de l'insert 11A. Cette dernière alternative peut intervenir au lieu de réaliser d'abord l'insert basique bois 16 puis de le recouvrir ultérieurement par deux films externes de protection 2, 8.

Ainsi, grâce à ces films de recouvrement (overlays classiques notamment en PVC), il est possible d'effectuer sur cet insert 11A la plupart des opérations de personnalisation graphique, notamment d'impression sérigraphie, offset...).

De même, il est possible d'effectuer les opérations d'embossage 20, de marquage à chaud ou fixation à chaud de motifs de décoration ou de personnalisation graphique, sans aucune modification des machines couramment utilisées de l'industrie de la carte à puce. On retrouve ainsi une stabilité et durabilité des marquages effectués plutôt de de les réaliser sur le bois directement.

De manière avantageuse, dans tous les exemples, les feuilles en bois peuvent être fournies, avec un film plastique associé recouvrant au moins toute une face de chaque feuille en bois de manière à la stabiliser contre des risques de déformation.

De préférence, chaque feuille en bois peut être fournie en étant recouvert de ce film plastique sur chaque face. Ce film peut être un « overlay » 2, 4 ou 6, 8 couramment utilisé dans l'industrie de la carte à puce. Ce film comprend déjà un adhésif sur la face à adhérer au bois. Ainsi, chaque feuille de bois est bien stabilisée est peut être stocké dans des endroits plus ou moins humides et/ou chauds sans trop risquer des déformations.

Il suffit ensuite pour obtenir un insert d'assembler les deux feuilles avec une feuille centrale polymère compatible en thermo lamination (ou un adhésif) d'épaisseur appropriée en fonction de l'épaisseur finale à atteindre.

Au cours d'une étape 300, selon une caractéristique de ce mode préféré, le procédé peut comprendre une personnalisation graphique P1, P2 sur ledit au moins un premier film de protection transparent 2T, 8T (overlays 2, 8) de l'insert 11A.
Avantageusement, cela peut s'effectuer sans adaptation ou modification des techniques de marquage de l'outil industriel.

Au cours d'une étape 400, selon autre une caractéristique optionnelle de ce mode préféré, le procédé peut comprendre une opération d'adhésion d'au moins un second film de protection transparent 1T, 9T sur au moins ledit premier film de protection transparent 2T, 8T (overlays 1, 9) et/ou ladite personnalisation graphique P1, P2 (au cas où cette dernière serait intervenue entretemps).

Pour les étapes 300 et 400, les premier 2T, 8T et second films transparents 4T, 6T ci-dessus peuvent porter de préférence un adhésif 1c, 2c, 8c, 9c sur leur face interne 4h, 6b (orienté vers l' insert 16). Ces films 2T, 8T et 4T, 6T peuvent être en fait avantageusement des films de protection revêtus d'adhésif couramment utilisés dans l'industrie de la carte à puce.

Les premiers ou seconds films de protection transparents peuvent être en particulier deux films en PVC revêtus d'un adhésif sur une face, la face adhésive étant orientée vers l'insert 16.
Les films 1 et 9 ont ici une épaisseur de 55 µm (comme les films 4 et 6) ; Les films 2 et 8 ont ici une épaisseur de 100 µm. Les feuilles en bois ont ici dans l'exemple, une épaisseur de 150 µm. D'autres épaisseurs ou combinaison d'épaisseur sont possibles.

On remarque que la carte en bois selon l'invention peut utiliser avantageusement six films de protection transparents adhésivés dont quatre identiques (1, 9, 4, 6) sont moins épais. Cela permet de rationaliser ou faciliter la gestion des stocks et/ou approvisionnement de matière première. Bien sûr les films 4 et 6 et feuille 5 (inlay) disposés entre les deux feuilles en bois n'ont pas besoin d'être transparents. Cependant, les inventeurs ont constatés qu'ils peuvent voir se refléter sur la tranche 11 du corps de carte, les surfaces internes des feuilles en bois adjacentes.

Ainsi, il peut ne pas être nécessaire d'imprimer un motif imitant du bois sur la tranche 11 du corps de carte. Alternativement, en ayant ces films 4, 5, 6 transparents et/ou de même épaisseurs, il est plus aisé de gérer les approvisionnements.
Au cours d'une étape 500, selon une caractéristique optionnelle mais préférée, le procédé peut prévoir de réaliser la structure centrale adhésive 15 d'une manière spécifique avantageuse ci-après.

La structure centrale adhésive 15 peut résulter d'un assemblage d'un troisième film polymère 4T, 6T sur chaque face principale 5h, 5b d'une feuille polymère centrale 5T. Et c'est la face externe 4h, 6b de chaque film polymère 4T, 6T qui porte un adhésif 4c, 6c et qui va adhérer aux feuilles en bois pour les réunir ensemble.

Ce mode opératoire permet de bien régler l'épaisseur de la carte avec une feuille centrale et plusieurs (overlays) films de protection transparents revêtus d'adhésif identiques. Ainsi, l'invention peut utiliser deux overlays identiques 4 et 6 de 55 µm d'épaisseur chacun.

Il suffit d'ajuster l'épaisseur de la feuille centrale (5 ou 5T), ici en PVC pour, obtenir, en fonction des autres couches, polymère, adhésifs ou bois, l'épaisseur voulu de 760 µm du corps de carte à puce 10.

Dans l'exemple, les deux films de protection transparents 4T, 6T de la structure centrale adhésive 15 sont ici en PVC revêtus d'un adhésif sur une face et sont placés dos à dos à l'intermédiaire et contre une feuille centrale 5T ici aussi en PVC.

Les feuilles de bois peuvent être de préférence fournies avec la structure polymère 11A sous forme d'inlay ou insert pour former un complexe ou composite bois / polymère stable contre l'humidité notamment. Les feuilles (ou film) polymère (à l'exception des feuilles en bois) peuvent être notamment en tout matériau plastique notamment à base de polychlorure de vinyle (PVC), d'un polyéthylène téréphtalate (PET), d'un polycarbonate (PC), d'un polyéthylène téréphtalate glycol (PETG), d'un acrylonitrile butadiène styrène (ABS).

Les différentes couches polymères sont est ici en PVC pour faciliter l'assemblage par laminage avec l'inlay 5 et l'assemblage avec les différents films de recouvrement et faciliter les impressions de personnalisation.

Les feuilles et différentes couches peuvent être au format standard des cartes à puce environ 54 X 86 mm. Alternativement, les feuilles en bois (ou complexes) peuvent être traitées sous forme de plaques avec plusieurs emplacements de cartes et être découpées ensuite au format final de carte à puce après laminage thermique de l'ensemble, totalisant 900 pm, pour une adhésion à chaud et mise ensuite à l'épaisseur finale de 760 µm par lamination.

Les feuilles ou film polymères PVC peuvent comprendre une phase thermoadhésive et/ou une phase thermodurcissable de manière qu'après lamination à chaud, l'ensemble ne soit plus démontable par apport thermique.

Le cas échéant, alternativement, les différentes couches composant la structure du corps peuvent être assemblées avec un adhésif enduit sur leur surface d'assemblage.

Concernant l'antenne éventuelle, pour une fonction radiofréquence, de préférence, on réalise l'antenne par tout procédé connu tel que gravure de cuivre, incrustation de fil, jet de matière, etc. sur un substrat.
L'antenne peut être réalisée sur une des couches d'adhésion 4c, 6c ou de composition 4T, 5T, 6T de la structure centrale 15.

L'antenne AC1 ou AC2 peut être réalisée sur l'une et/ou l'autre feuille ou film d'assemblage de l'ensemble insert (ou inlay) 15, de préférence avant assemblage ou en la disposant entre les feuilles en bois.

L'antenne AC1 ou AC2 peut être une antenne passive couplée par induction à une antenne AM de transpondeur radiofréquence disposée sur le module M.

Toutefois, dans le cadre d'un module radiofréquence connecté électriquement à une antenne classique AC1 ou AC2, l'antenne peut comporter des plages d'interconnexion ou des zigzags filaires (non représentés) dans une zone ou emplacement de module radiofréquence M. Ces plages sont accessibles dans une cavité réalisée à cet emplacement.

Selon une caractéristique, le mode préféré peut comprendre une étape d'impression sur la tranche du corps de carte d'un motif graphique imitant l'aspect du bois. L'insert (inlay) 5 ou 15 peut ne pas être transparent ou ne pas être de couleur proche de celle des feuilles en bois.

L'impression 14 sur la tranche T permet de mieux lier les différentes couches entre elles et ainsi une meilleure tenue des couches à l'encontre d'un risque de la délamination sur les tranches et/ou dans les coins de la carte.

En outre, l'impression masque l'interface de l'assemblage entre les feuilles en bois 5B, 6B. L'impression 14 permet d'imiter le véritable aspect du bois par une reproduction à l'identique d'une photographie de la tranche en bois de la carte.

L'impression 14 peut être réalisée de préférence par technique de jet 18 de matière ou de jet d'encre notamment à l'aide d'une imprimante 19. D'autres techniques d'impression sont possibles (sérigraphie, etc.).

L'impression peut être effectuée uniquement sur une zone centrale de la tranche de manière à recouvrir au moins la matière polymère d'assemblage existant sur la tranche de la carte à l'exception du bois. L'impression peut être effectuée de manière à recouvrir au moins les matériaux distincts du bois et situés à l'interface entre les deux feuilles en bois.

Les surfaces externes de la carte peuvent comprendre de préférence une couche de protection plastique 1, 9 et/ou 2, 8 (overlay) permettant la mise en place de piste magnétique ainsi que d'éléments de personnalisation tels qu'hologramme, pavé de signature...

De préférence, la tranche T du corps 10, 10A de carte comporte un motif graphique imitant une surface réelle de carte en bois.

L'impression peut être effectuée uniquement sur la matière polymère d'assemblage et/ou de substrat, existant sur la tranche de la carte. L'impression forme ainsi une bande 14 centrale entourant tout le bord (tranche) de la carte et dont la largeur peut être comprise par exemple entre 400 µm et 760 µm.

Ainsi, le procédé de l'invention permet d'obtenir une carte à puce 10 comportant un corps avec un insert 16 contenant au moins une feuille en bois 3B, 7B ; L'insert 16 comporte des faces principales externes opposées 15h, 15b présentant chacune une surface en bois.

L'insert basique 16, ou préparé 11A pour personnalisation graphique, comprend un assemblage d'au moins deux feuilles de bois distinctes 3B, 7B via une structure centrale 15 adhésive ; Les deux feuilles de bois, une fois assemblées en insert, présentent une surface en bois 15h, 15b sur chacune de leur face principale externe (non reliée à la structure adhésive centrale.

## Revendications

1. Procédé de fabrication d'une carte à puce (10) comportant un corps avec un insert (16) contenant au moins une feuille en bois (3B, 7B), ledit insert (16) comportant des faces principales externes opposées (15h, 15b) présentant chacune une surface en bois,
**caractérisé en ce qu'**il comprend l'étape suivante :
- obtention d'une surface en bois (15h, 15b) sur chaque face principale externes opposée de l'insert, par assemblage d'au moins deux feuilles de bois distinctes (3B, 7B) via une structure centrale adhésive (15).

2. Procédé selon la revendication précédente, **caractérisé en ce qu'**il comprend une étape d'adhésion d'au moins un premier film de protection transparent (2T, 8T) sur ladite surface en bois (15h, 15b) de chacune des faces principales de l'insert (16).

3. Procédé selon l'une des revendications précédentes, **caractérisé en ce qu'**il comprend une étape de fourniture ou de préparation desdites deux feuilles en bois (3B, 7B) en étant prélaminées sur chaque face principale avec un film de protection polymère (2, 4, 6, 8).

4. Procédé selon l'une des revendications précédentes, **caractérisé en ce qu'**il comprend une étape de personnalisation graphique (P1, P2) sur ledit au moins un premier film de protection transparent (2T, 8T) de l'insert (16).

5. Procédé selon la revendication précédente, **caractérisé en ce qu'**il comprend une étape d'adhésion d'au moins un second film de protection transparent (1T, 9T) sur au moins ledit premier film de protection transparent (2T, 8T) et/ou ladite personnalisation graphique (P1, P2).

6. Procédé selon l'une des revendications précédentes, **caractérisé en ce que** ladite structure centrale adhésive (15) comprend un assemblage d'un troisième film polymère (4T, 6T) sur chaque face principale (5h, 5b) d'une feuille polymère centrale (5T), la face externe (4h, 6b) de chaque film polymère (4T, 6T) portant un adhésif (4c, 6c).

7. Procédé selon l'une des revendications précédentes, **caractérisé en ce que** lesdits premier (2T, 8T) et second films transparents (4T, 6T) portent un adhésif (1c, 2c, 8c, 9c) sur leur face interne (4h, 6b).

8. Procédé selon l'une des revendications précédentes, **caractérisé en ce que** la structure centrale adhésive comprend deux films de protection transparents en PVC adhésifs sur une face et placés dos à dos contre une feuille centrale en PCV.

9. Procédé selon l'une des revendications précédentes, **caractérisé en ce que** les premiers ou seconds films de protection transparents sont deux films en PVC adhésifs sur une face, la face adhésive étant orientées vers l'insert.

10. Procédé selon l'une des revendications précédente, **caractérisé en ce qu'**il comprend une étape de réalisation d'une antenne sur une des couches d'adhésion (4c, 6c) ou de composition (4T, 5T, 6T) de ladite âme centrale (15).

11. Procédé selon la revendication précédente, **caractérisé en ce qu'**il comprend une étape d'impression sur la tranche (11) du corps (10) de carte d'un motif graphique (14) imitant l'aspect du bois.

12. Carte à puce (10) comportant un corps avec un insert (16) contenant au moins une feuille en bois (3B, 7B), ledit insert (16) comportant des faces principales externes opposées (15h, 15b) présentant chacune une surface en bois, **caractérisée en ce que** ledit insert comprend un assemblage d'au moins deux feuilles de bois distinctes (3B, 7B) via une structure centrale adhésive (15), les deux feuilles de bois présentant ladite surface en bois (15h, 15b) sur chacune de leur face principale externes opposée.

13. Carte selon la revendication précédente, **caractérisé en ce que** le corps comprend au moins un premier film de protection transparent (2T, 8T) adhérant sur ladite surface en bois (15h, 15b) de chacune des faces principales de l'insert (16).

14. Carte selon la revendication précédente, **caractérisé en ce que** le corps comprend une personnalisation graphique (P1, P2) sur ledit au moins un premier film de protection transparent (2T, 8T) de l'insert (16).

15. Carte selon la revendication précédente, **caractérisé en ce que** le corps comprend au moins un second film de protection transparent (1T, 9T) adhérant sur au moins ledit premier film de protection transparent (2T, 8T) et/ou ladite personnalisation graphique (P1, P2).
